# EUROPEAN PATENT APPLICATION

(11) **EP 1 818 851 A1**
(43) Date of publication of application: **15.08.2007**
(21) Application number: 06290235.8
(22) Date of filing: 09.02.2006
(51) Int. Cl.: G06K 1/12, G06K 19/077

(54) **Portable object having a contact interface, and personalisation of contact interface**

(71) Applicant: Axalto S.A., 92120 Montrouge (FR)
(72) Inventor: Groeninck, Denis Axalto S.A., 92120 Montrouge (FR); Welsch, Pierre-Alois Axalto S.A., 92120 Montrouge (FR); Fortel, Julien Axalto S.A., 92120 Montrouge (FR)
(74) Representative: Cour, Pierre

(57) **Abstract**

The invention relates to a portable object having at least a contact interface flushing its surface, and to the personalisation of such contact interface (10, 11). The method of personalization comprises the steps of :
- applying a conductive coloured layer on the whole surface of the contact interface (10, 11) and,
- removing the applied layer at least in spaces (15) between the contacts (13) of the contact interface.

## Description

The invention relates to a portable object having at least a contact interface flushing its surface, and to the personalisation of such contact interface.

The invention applies to any type of smart card or other portable object which holds in the hand , provided that it uses contact pads to connect electrically the chip to the outside world. The portable object can be either a pure contact smart card or an hybrid smart card or a dual-interface smart card, for example.

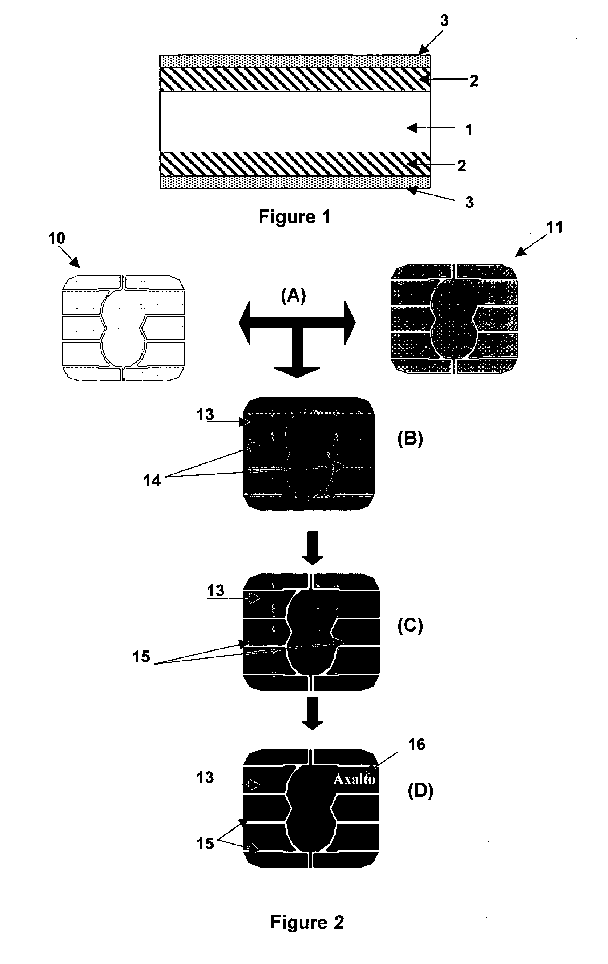

As illustrated in figure 1, contacts of the contact interface are currently made of a stack of layers comprising at least a first layer of copper 1, plated on both sides by a second layer of nickel 2, which is also plated on both sides by an upper layer 3 of either gold or palladium. Thus, the contact interface of the currently commercialised electronic modules exist only in two colours. Indeed, the surface of the contact interface is either yellow-gold or silver-grey, depending on the upper conductive layer of the contacts.

Nowadays, there is a strong request for making fully personalized portable object, namely as well as on the surface of a card body as on the surface of the module. Such full personalization is particularly requested because it allows to obtain easily distinguishable products.

Today, a known process for colouring the surface of a contact interface consists in covering the spaces between the contacts by a stencil in order to prevent any later short-circuit and then, applying a conductive lacquer comprising pigments on the contacts.

However, the stencil has to be positioned with precision before the application of the conductive lacquer, so that the process is time consuming and increases the cost of the module. In addition, the use of a stencil, for each module to colour, and the lacquer components increase also substantially the cost of the module.

Considering the above, a problem intended to be solved by the invention is to provide a method of personalization of an electronic module comprising a contact interface, said method being an alternative solution with those which already exist, allowing better productivity and cost reduction.

The solution of the invention to this problem relates to the fact that the method comprises the steps of :
- applying a conductive coloured layer on the whole surface of the contact interface and,
- removing the applied layer at least in spaces between the contacts of the contact interface.

Thus, an additional stencil is not required anymore.

For a better understanding of the present invention, reference will now be made, by way of example, to the following description of the invention and to the accompanying drawings, in which:
- figure 1, already described, is a schematic cross-section illustrating the composition layers of a contact of a conventional electronic module ;
- figure 2 is a front view of the surface of a contact interface at different steps of a personalization process according to the invention.

In figure 2, are schematized the different steps of the personalization of a contact interface. First step A consists in taking a conventional module having a contact interface either with gold-plated finish 10 or with palladium-plated finish 11.

In a second step B, the whole surface of the interface contact 13 is covered by a conductive coloured layer. Preferably, this layer comprises a ceramic of Tin-doped Indium oxide (ITO ceramic). Such ceramic is known as having an excellent conductivity. This layer allows to keep properties compatible with the current qualification plan of the electronic module. This coating layer is preferably applied on the surface of the contact interface by sputtering.

In this case, coloration is given by light reflection and refraction of the ITO ceramic. Consequently various colours are obtained depending on the thickness of the sputtered layer. Moreover, the coloration depends also from the specific nature and colour of the substrate, namely the gold-plated or the palladium-plated contact interface. However, the thickness of this layer is limited by the dimensions of the portable object in which the module is embedded because the contact interface has to flush the surface of the portable object. For this reason, the thickness of the applied layer is preferably less than 1µm.

This second step leads to the creation of electric short-circuits in the areas 14 located between each contact 13 of the contact interface. These short-circuits are removed in a further step C. For that, the layer applied is removed in these spaces between the contacts of the contact interface, for creating insulation lines 15. This step of removal is advantageously carried out by means of a laser.

The laser used is for example a YAG laser. However, other lasers may be used such as, for example, SHG or THG lasers.

The contact interface obtained, after the step C, comprises contacts 13, covered by a conducting coloured layer, well isolated the ones from the others by lines 15.

An optional step D can be performed simultaneously with step C of removal of the coating layer, in the inter-contact areas 15. This optional step allows to apply any kind of logo and/or text 16 required onto the contact interface. For that, the laser beam is also used to remove the additional coloured coating layer on at least one contact 13 of the interface, in order to reveal the initial colour of the upper gold or palladium layer of the contact, and thus creating a logo and/or text for distinction purposes.

This further optional step is very interesting because it does not involve the engraving of initial upper layers, of gold or palladium, composing the contacts, said engraving revealing the lower layer of nickel and being able to lead to lower corrosion resistance and damage electrical properties of contacts. Indeed, gold and palladium being metals nobler than nickel, when the layer of nickel is engraved, the corrosion of the least noble metal (i.e. nickel) is accelerate with the profit of the noblest metal (i.e. gold or palladium).

An electronic module is inserted in a cavity provided in a portable object, in such a manner that its contact plate flushes the surface of the portable object. The coloration and the personalization of the electronic module, according to the invention, can be made either before or after its insertion in the portable object.

The portable object can be either a pure contact smart card or an hybrid smart card or a dual-interface smart card, for example. The portable object may comprise more than one personalized module.

## Claims

1. A method of personalization of an electronic module comprising a contact interface (10, 11), said method comprising the steps of :
- applying a conductive coloured layer on the whole surface of the contact interface (10, 11) and,
- removing the applied layer at least in spaces (15) between the contacts (13) of the contact interface.

2. A method as claimed in claim 1, wherein the conductive coloured layer comprises a ITO ceramic.

3. A method as claimed in claim 1 or 2, wherein the thickness of the conductive coloured layer is less than 1µm.

4. A method as claimed in claim 2, wherein the conductive coloured layer is applied by sputtering.

5. A method as claimed in claim 1, wherein the applied layer is removed by means of a laser beam.

6. A method as claimed in claim 5, wherein the laser is a YAG laser.

7. A portable object comprising at least one embedded electronic module whose contact interface flushes the surface of said portable object, wherein the contact interface of the module is personalized according to the method as claimed in previous claims 1 to 6.
